# EUROPÄISCHE PATENTSCHRIFT

(11) **EP 3 236 059 B1**
(45) Veröffentlichungstag und Bekanntmachung des Hinweises auf die Patenterteilung: **23.06.2021**
(21) Anmeldenummer: 17151259.3
(22) Anmeldetag: 12.01.2017
(51) Int. Cl.: F02M 21/02, F16K 41/10, F16K 31/06

(54) **STEUERVENTIL ZUR STEUERUNG EINES MEDIUMS, INSBESONDERE EINES KRAFTSTOFFS**
CONTROL VALVE FOR CONTROLLING A MEDIUM, IN PARTICULAR A FUEL
SOUPAPE DE COMMANDE D'UN MILIEU, EN PARTICULIER UN CARBURANT

(30) Priorität: 18.04.2016 DE 102016206473
(43) Veröffentlichungstag der Anmeldung: 25.10.2017
(73) Patentinhaber: Robert Bosch GmbH, 70442 Stuttgart (DE)
(72) Erfinder: Baumann, Dietmar, 71282 Hemmingen (DE); Langer, Winfried, 75428 Illingen (DE); Bokesch, Stefanie, 70806 Kornwestheim (DE); Yang, Jiandu, 71229 Leonberg (DE); Krauter, Lothar, 74321 Bietigheim-Bissingen (DE)

(56) Entgegenhaltungen:
- DE-A1- 10 121 072
- DE-A1- 19 721 668
- DE-A1-102009 012 689
- DE-A1-102014 212 320
- DE-U1- 20 017 298
- US-A1- 2015 285 382

## Beschreibung

### Stand der Technik

Die vorliegende Erfindung betrifft ein Steuerventil zur Steuerung eines Mediums, insbesondere eines Kraftstoffs, eine Vorrichtung zur Zumessung eines Gases, insbesondere eines gasförmigen Kraftstoffs, sowie eine Gasversorgungseinrichtung einer Brennkraftmaschine, insbesondere in einem Fahrzeug.

Steuerventile zur Steuerung von Medien sind aus dem Stand der Technik in unterschiedlichen Ausgestaltungen bekannt. Beispielsweise zeigt die DE 10 2007 022 214 A1 ein Druckregelsystem für gasbetriebene Brennkraftmaschinen, welches ein Druckregelventil aufweist, das einen stromabwärts eines Ventilsitzes einstellbaren Druck mithilfe einer Referenzdruckkammer verändern kann. Dieses Druckregelsystem hat sich grundsätzlich bewährt, weist jedoch einen relativ komplexen und teuren Aufbau durch Verwendung von zwei Steuerventilen auf. Weiterhin ist auch eine Referenzdruckkammer notwendig, sodass sich ein relativ großer Bauraum für das Druckregelsystem ergibt. Aufgrund der vorherrschenden Bestrebungen, Brennkraftmaschinen immer kleiner und effizienter zu gestalten, wäre es daher wünschenswert, ein verbessertes Steuerventil der Steuerung von Medien, insbesondere zur Steuerung von gasförmigen Kraftstoffen, zu haben. Z Die DE 200 17 298 U1 beschreibt ein Vakuumventil, gemäss dem Oberbegriff des Anspruchs 1.

### Offenbarung der Erfindung

Das erfindungsgemäße Steuerventil zur Steuerung eines Mediums mit den Merkmalen des Anspruchs 1 weist demgegenüber den Vorteil auf, dass ein einfacher und kostengünstiger Aufbau möglich ist, welche insbesondere nur einen sehr geringen Platzbedarf benötigt. Dadurch ist eine Verwendung auch bei kleinbauenden Brennkraftmaschinen möglich. Weiterhin ist vorteilhaft, dass durch das erfindungsgemäße Steuerventil keine Schwingungsanregung aufgrund von Druckkräften auftritt. Dies wird erfindungsgemäß dadurch erreicht, dass das Steuerventil einen Dichtsitz und ein Ventilglied umfasst, welches einen Durchlass am Dichtsitz freigibt und verschließt. Ferner ist ein Aktor zur Betätigung des Ventilglieds sowie ein Faltenbalg vorgesehen. Der Faltenbalg ist am Ventilglied fixiert, wobei das Ventilglied im Inneren des Faltenbalgs angeordnet ist. Ferner ist ein äußerster Durchmesser des Dichtsitzes gleich groß wie ein mittlerer Durchmesser des Faltenbalgs. Der äußerste Durchmesser des Dichtsitzes ist dabei der Durchmesser, an welchem bei geschlossenem Steuerventil die Dichtfläche zwischen Dichtsitz und Ventilglied durch den größten Durchmesser begrenzt wird. Der mittlere Durchmesser des Faltenbalgs ist dabei der mittlere Durchmesser zwischen einem inneren Durchmesser des Faltenbalgs und einem äußeren Durchmesser des Faltenbalgs. Somit ist es erfindungsgemäß möglich, dass das Steuerventil druckausgeglichen ist, sodass ein hoher Druck des zu steuernden Mediums, welcher in Strömungsrichtung vor dem Steuerventil herrscht, keine Kraftwirkung auf das Ventilglied des Steuerventils hat. Dadurch kann eine Stellkraft für die Verstellung des Ventilglieds signifikant reduziert werden. Somit kann insbesondere auch der Aktor zur Betätigung des Ventilglieds sehr kleinbauend sein. Ferner benötigt das erfindungsgemäße Steuerventil auch keine Referenzdruckkammer, wodurch ein Risiko einer Leckage in die Umgebung reduziert wird. Durch die geschickte Anordnung des Faltenbalgs am Ventilglied wirkt ein Druck des zu steuernden Mediums in Strömungsrichtung vor dem Dichtsitz ausschließlich radial auf den Faltenbalg.

Die Unteransprüche zeigen bevorzugte Weiterbildungen der Erfindung.

Besonders bevorzugt ist der Faltenbalg an einem äußersten Randbereich des Ventilglieds angeordnet. Dadurch kann sichergestellt werden, dass ein Druck des Mediums nicht in Axialrichtung auf das Ventilglied wirken kann, da der Faltenbalg das Ventilglied vollständig abschirmt.

Das Ventilglied weist besonders bevorzugt einen sich erweiternden Bereich auf, insbesondere einen sich konisch erweiternden Bereich, wobei der Faltenbalg am größten Durchmesser des sich erweiternden Bereichs fixiert ist.

Bevorzugt ist der Faltenbalg ein Metallfaltenbalg. Eine Fixierung des Metallfaltenbalgs ist vorzugsweise mittels einer Schweißverbindung vorgesehen.

Weiter bevorzugt ist der Dichtsitz des Steuerventils ein Flachdichtsitz. Hierdurch kann eine ringförmige Flachdichtsitzfläche bereitgestellt werden.

Am Dichtsitz ist besonders bevorzugt ein Elastomer vorgesehen. Hierdurch können insbesondere gasförmige Medien besonders gut abgedichtet werden.

Weiter bevorzugt ist der Aktor vorzugsweise elektrisch betätigbar. Der Aktor ist besonders bevorzugt ein Magnetaktor. Weiter bevorzugt wird der Aktor mittels Pulsweitenmodulation angesteuert.

Ferner umfasst das Steuerventil bevorzugt eine Steuereinheit, welche eingerichtet ist, den Aktor basierend auf einem Druck des Mediums in Strömungsrichtung vor dem Dichtsitz und/oder einem Druck des Mediums in Strömungsrichtung nach dem Dichtsitz anzusteuern.

Der Aktor ist besonders bevorzugt ein Magnetaktor.

Gemäß einer weiteren bevorzugten Ausgestaltung der vorliegenden Erfindung umfasst das Steuerventil ferner ein Rückstellelement, insbesondere eine Rückstellfeder, wobei das Rückstellelement das Ventilglied in eine geschlossene Position vorspannt. Dadurch ist das Steuerventil auch als Absperrventil vorgesehen, sodass beispielsweise bei Verwendung in einer Brennkraftmaschine das erfindungsgemäße Steuerventil sowohl eine Zumessung als auch eine Absperrung des abzudichtenden Mediums vornimmt.

Die Erfindung betrifft weiter bevorzugt eine Vorrichtung zur Zumessung eines Gases, insbesondere eines gasförmigen Kraftstoffs, umfassend ein erfindungsgemäßes Steuerventil. Der gasförmige Kraftstoff ist besonders bevorzugt Erdgas oder Wasserstoff oder Propan oder Butan. Alternativ kann als Kraftstoff auch ein flüssiger Kraftstoff verwendet werden, wobei das Steuerventil die gleichen Vorteile für ein flüssiges Medium wie bei einem gasförmigen Medium aufweist. Alternativ kann als zu steuerndes Medium auch ein flüssiges Medium, beispielsweise ein flüssiger Kraftstoff, beispielsweise Benzin oder Diesel verwendet werden.

Weiter bevorzugt umfasst die Vorrichtung zur Zumessung ferner einen ersten Drucksensor zur Erfassung eines Drucks in Strömungsrichtung vor dem Steuerventil und/oder einen zweiten Drucksensor zur Erfassung eines Drucks in Strömungsrichtung nach dem Steuerventil. Der erste und/oder zweite Drucksensor ist jeweils besonders bevorzugt mit der Steuereinheit zur Steuerung des Aktors verbunden.

Weiterhin betrifft die vorliegende Erfindung eine Gasversorgungseinrichtung einer Brennkraftmaschine umfassend einen Gastank und einen Einblasinjektor sowie ein erfindungsgemäßes Steuerventil. Die Gasversorgungseinrichtung ist besonders bevorzugt für gasförmige Kraftstoffe ausgelegt.

### Kurze Beschreibung der Zeichnung

Nachfolgend wird ein bevorzugtes Ausführungsbeispiel der Erfindung unter Bezugnahme auf die begleitende Zeichnung im Detail beschrieben. In der Zeichnung ist:

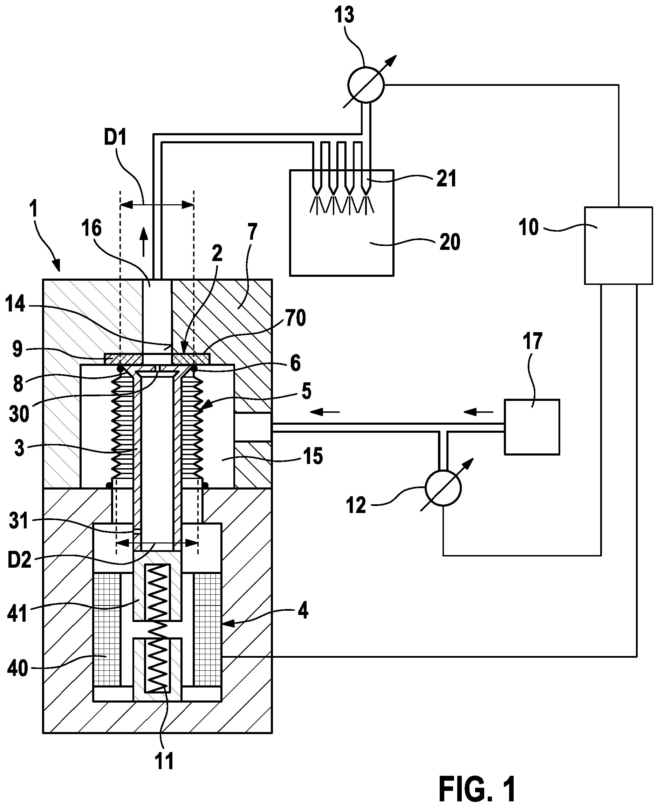

- Figur 1: eine schematische Darstellung eines Steuerventils zur Steuerung eines Mediums sowie einer Gasversorgungseinrichtung einer Brennkraftmaschine gemäß einem bevorzugten Ausführungsbeispiel der Erfindung.

### Bevorzugte Ausführungsform der Erfindung

Nachfolgend wird unter Bezugnahme auf Figur 1 ein Steuerventil 1 zur Steuerung eines Mediums im Detail beschrieben.

Das Steuerventil 1 umfasst einen Dichtsitz 2 und ein Ventilglied 3, welches in diesem Ausführungsbeispiel ein Ventilkolben ist. Das Ventilglied 3 weist an einem zum Dichtsitz 2 gerichteten Ende einen sich erweiternden Bereich 8 auf. Der sich erweiternde Bereich 8 erweitert sich konisch. Der Ventilkolben ist hohl vorgesehen und weist zwei Ausgleichsöffnungen 30, 31 auf.

Das Steuerventil 1 umfasst ferner einen Aktor 4, welcher in diesem Ausführungsbeispiel ein Magnetaktor ist. Der Aktor 4 umfasst eine Spule 40 und einen Anker 41, welcher mit dem Ventilglied 3 verbunden ist.

Das Ventilglied 3 ist ferner in einem Faltenbalg 5 angeordnet. Der Faltenbalg 5 ist mit einer Schweißverbindung 6 am sich erweiternden Bereich 8 des Ventilglieds 3 fixiert. Genauer weist das Ventilglied 3 einen äußersten größten Durchmesser D1 am Dichtsitz 2 auf und der Faltenbalg 5 weist einen mittleren Durchmesser D2 auf. Der mittlere Durchmesser D2 des Faltenbalgs ist dabei der Durchmesser, welcher in der Mitte zwischen dem durch die inneren Spitzen des Faltenbalgs gebildeten inneren Durchmessers und die äußeren Spitzen des Faltenbalgs gebildeten äußeren Durchmessers liegt.

Wie weiter aus Figur 1 ersichtlich ist, ist der Dichtsitz 2 als Flachdichtsitz ausgebildet, welcher durch ein Elastomer 9 vorgesehen ist. Das Elastomer 9 ist in einem Gehäuse 7 in einem entsprechend gebildeten Rücksprung 70 angeordnet. Somit dichtet das Ventilglied 3 am Elastomer 9 ab.

Das Steuerventil 1 trennt somit einen Hochdruckbereich 15 von einem Niederdruckbereich 16. Dabei verschließt das Ventilglied 3 einen Durchlass 14 bzw. gibt diesen frei. Figur 1 zeigt dabei den geschlossenen Zustand des Steuerventils.

Das erfindungsgemäße Steuerventil 1 wird in diesem Ausführungsbeispiel in einer Brennkraftmaschine 20 verwendet. Die Brennkraftmaschine 20 wird dabei mit einem gasförmigen Kraftstoff, z. B. Erdgas oder dergleichen betrieben. An der Brennkraftmaschine 20 sind schematisch vier Injektoren 21 dargestellt.

Die Ansteuerung des Steuerventils 1 erfolgt mittels einer Steuereinheit 10. Die Steuereinheit 10 steuert das Steuerventil 1 dabei basierend auf einem Druck des Niederdruckbereichs 16 sowie einem Druck des Hochdruckbereichs 15. Hierbei ist ein erster Drucksensor 12 am Hochdruckbereich 15 vorgesehen, um den Druck des Hochdruckbereichs zur Steuereinheit 10 zu übermitteln. Ein zweiter Drucksensor 13 ist am Niederdruckbereich 16 vorgesehen, um den Druck des Niederdruckbereichs zur Steuereinheit 10 zu übermitteln. Die Injektoren 21 können dabei bevorzugt über ein gemeinsames Rail miteinander verbunden sein.

Das Bezugszeichen 17 bezeichnet ferner einen Tank, in welchem der gasförmige Kraftstoff gespeichert ist.

Abhängig vom Druckniveau im Hochdruckbereich 15 und im Niederdruckbereich 16 steuert die Steuereinheit 10 dabei den Öffnungsweg des Ventilglieds 3. Somit wird ein vorbestimmter Massenstrom vom Hochdruckbereich 15 zum Niederdruckbereich 16 ermöglicht, wodurch ein entsprechender Druckanstieg im Niederdruckbereich möglich ist. Wie aus Figur 1 ersichtlich ist, wirkt der hohe Druck des Hochdruckbereichs 15 auf den Faltenbalg 5 nur in radialer Richtung. In axialer Richtung heben sich die Druckkräfte aufgrund des Zick-Zack-Aufbaus des Faltenbalgs 5 auf.

Zur Versorgung der Injektoren 21 ist dabei erfindungsgemäß nur ein einziges Steuerventil 1 notwendig. Da der Hochdruck nur radial am Faltenbalg 5 und somit auch nur radial am Ventilglied 3 angreift, hat der Hochdruck keinen Einfluss auf eine Kräftebilanz des Ventilglieds 3. Dabei übernimmt der Faltenbalg 5 auch eine Abdichtfunktion gegenüber dem Aktor 4. Der Aktor 4 ist dabei bevorzugt als Magnetaktor ausgebildet und kann sehr kleinbauend ausgelegt werden, da die notwendigen Stellkräfte zum Öffnen des Ventilglieds 3 aufgrund der ausschließlich radialen Angreifbarkeit der Hochdruckkräfte am Faltenbalg 5 nur sehr gering sind. Insgesamt weist das erfindungsgemäße Steuerventil 1 dabei einen sehr einfachen und kostengünstigen Aufbau auf.

Die Verwendung des Faltenbalgs 5 ermöglicht ferner auch noch eine Vermeidung von Reibkräften an Dichtelementen, welche sonst im Stand der Technik am Ventilglied 3 vorgesehen werden müssen, um den Aktor 4 vor dem hohen Druck des Hochdruckbereichs 16 zu schützen. Im Hochdruckbereich 15 herrschen üblicherweise Drücke zwischen 25 und 1,5 MPa, welcher dann mittels des erfindungsgemäßen Steuerventils 1 auf einen zur Einspritzung notwendigen Niederdruck im Niederdruckbereich 16 zwischen 0,5 und 1,5 MPa geregelt werden.

Erfindungsgemäß kann somit eine einstufige Druckregelung von einem Hochdruckbereich 15 zu einem Niederdruckbereich 16 ermöglicht werden. Eine Rückstellung des Ventilglieds 3 erfolgt dabei mittels eines Rückstellelements 11, welches in diesem Ausführungsbeispiel ein Federelement ist. Dadurch bleibt im nichtbestromten Zustand des Aktors 4 das Steuerventil 1 im geschlossenen Zustand. Somit wird zusätzlich durch das Steuerventil 1 noch eine automatische Absperrwirkung bei Abschaltung des Aktors 4 erreicht. Somit weist das erfindungsgemäße Steuerventil 1 neben der Zumessfunktion zusätzlich auch noch eine Absperrfunktion auf.

Es sei angemerkt, dass das erfindungsgemäße Steuerventil 1 auch bei flüssigen Medien, beispielsweise Flüssiggas, verwendet werden kann.

Durch das Elastomer 9 als Dichtelement wird ferner eine hohe Dichtheit erreicht. Eine Entspannung des gasförmigen Mediums erfolgt erst nach einem Passieren des Durchlasses 14, sodass das Elastomer 9 keine Abkühlung durch den Joule-Thomson-Effekt aufweist.

Es sei ferner angemerkt, dass es auch möglich ist, dass am Niederdruckbereich 16 zusätzlich ein Überdruckventil vorgesehen ist, welches bei einem eventuell auftretenden Überdruck vorzugsweise über eine Verbindungsleitung zum Saugrohr des Motors den Überdruck in das Saugrohr ableiten kann.

Es sei ferner angemerkt, dass neben den Drücken im Hochdruckbereich 15 und im Niederdruckbereich 16 eine Steuerung des Steuerventils 1 mittels der Steuereinheit 10 auch in Abhängigkeit des Massenstroms und/oder der Temperatur des Mediums möglich ist.

Ein weiterer Vorteil des erfindungsgemäßen Steuerventils liegt darin, dass bei Verwendung des Steuerventils mit gasförmigen Kraftstoffen auch bei einem geringen Differenzdruck zwischen dem Hochdruckbereich 15 und dem Niederdruckbereich 16, welcher auftreten kann, wenn der Tank 17 im Verlauf des Betriebes mehr und mehr geleert wird, einen hohen Massenstrom ermöglicht wird.

## Patentansprüche

1. Steuerventil zur Steuerung eines Mediums, insbesondere eines Kraftstoffs, umfassend:
- einen Dichtsitz (2),
- ein Ventilglied (3), welches einen Durchlass (14) am Dichtsitz (2) freigibt und verschließt,
- ein Gehäuse (7), das den Durchlass (14) als Niederdruckbereich (16) und einen durch das Steuerventil vom Niederdruckbereich (16) getrennten Hochdruckbereich (15) aufweist,
- einen in einem Aktorbereich des Gehäuses (7) angeordneten Aktor (4) zur Betätigung des Ventilglieds (3), und
- einen Faltenbalg (5), welcher am Ventilglied (3) fixiert ist und zur Abdichtung des Aktorbereichs gegenüber dem Hochdruckbereich (15) ausgeführt ist,
- wobei das Ventilglied (3) im Inneren des Faltenbalgs (5) angeordnet ist, und
- wobei ein äußerster Durchmesser (D1) des Dichtsitzes (2) gleichgroß ist wie ein mittlerer Durchmesser (D2) des Faltenbalgs (5),
**dadurch gekennzeichnet, dass**
- das Ventilglied (3) hohl ist und zwei Ausgleichsöffnungen (30,31) aufweist, wobei die eine Ausgleichsöffnung (30) in den Durchlass (14) und die andere Ausgleichsöffnung (31) in den Aktorbereich mündet.

2. Steuerventil nach Anspruch 1, **dadurch gekennzeichnet, dass** der Faltenbalg (5) an einem äußersten Randbereich des Ventilglieds (3) angeordnet ist.

3. Steuerventil nach Anspruch 1 oder 2, **dadurch gekennzeichnet, dass** das Ventilglied (3) einen sich erweiternden Bereich aufweist, an welchem der Faltenbalg (5) fixiert ist.

4. Steuerventil nach einem der vorhergehenden Ansprüche, **dadurch gekennzeichnet, dass** der Faltenbalg (5) ein Metallfaltenbalg ist und/oder dass der Dichtsitz (2) ein Flachdichtsitz ist.

5. Steuerventil nach einem der vorhergehenden Ansprüche, ferner umfassend ein Elastomerelement (9), welches am Dichtsitz (2) angeordnet ist.

6. Steuerventil nach einem der vorhergehenden Ansprüche, **dadurch gekennzeichnet, dass** der Aktor (4) ein elektrisch betätigbarer Magnetaktor ist.

7. Steuerventil nach einem der vorhergehenden Ansprüche, ferner umfassend eine Steuereinheit (10), welche eingerichtet ist, den Aktor (4) basierend auf einem Druck des Mediums in Strömungsrichtung vor dem Dichtsitz (2) und/oder basierend auf einem Druck des Mediums in Strömungsrichtung nach dem Dichtsitz (2) anzusteuern.

8. Steuerventil nach einem der vorhergehenden Ansprüche, ferner umfassend ein Rückstellelement (11), welches das Ventilglied (3) in eine geschlossene Position vorspannt.

9. Vorrichtung zur Zumessung eines Gases, insbesondere eine gasförmigen Kraftstoffes, umfassend ein Steuerventil (1) nach einem der vorhergehenden Ansprüche.

10. Vorrichtung nach Anspruch 9, ferner umfassend einen ersten Drucksensor (12) zur Erfassung eines Drucks in Strömungsrichtung vor dem Steuerventil (1) und/oder einen zweiten Drucksensor (13) zur Erfassung eines Drucks in Strömungsrichtung nach dem Steuerventil (1).

11. Brennkraftmaschine, umfassend ein Steuerventil nach einem der Ansprüche 1 bis 8 oder eine Vorrichtung zur Zumessung eines Gases gemäß Anspruch 9 oder 10.

## Claims

1. Control valve for controlling a medium, in particular a fuel, comprising:
- a sealing seat (2),
- a valve member (3) which opens up and closes a passage (14) at the sealing seat (2),
- a housing (7) which has the passage (14) as low-pressure region (16) and has a high-pressure region (15) which is separated from the low-pressure region (16) by the control valve,
- an actuator (4) which is arranged in an actuator region of the housing (7) and which serves for operating the valve member (3), and
- a corrugated bellows (5) which is fixed to the valve member (3) and which is designed for sealing off the actuator region with respect to the high-pressure region (15),
- wherein the valve member (3) is arranged in the interior of the corrugated bellows (5), and
- wherein an outermost diameter (D1) of the sealing seat (2) is equal to a mean diameter (D2) of the corrugated bellows (5), **characterized in that**
- the valve member (3) is hollow and has two equalizing openings (30, 31), wherein the one equalizing opening (30) opens into the passage (14) and the other equalizing opening (31) opens into the actuator region.

2. Control valve according to Claim 1, **characterized in that** the corrugated bellows (5) is arranged at an outermost edge region of the valve member (3).

3. Control valve according to Claim 1 or 2, **characterized in that** the valve member (3) has a widening region to which the corrugated bellows (5) is fixed.

4. Control valve according to any of the preceding claims, **characterized in that** the corrugated bellows (5) is a metal corrugated bellows and/or **in that** the sealing seat (2) is a flat sealing seat.

5. Control valve according to any of the preceding claims, furthermore comprising an elastomer element (9) which is arranged on the sealing seat (2).

6. Control valve according to any of the preceding claims, **characterized in that** the actuator (4) is an electrically operable magnetic actuator.

7. Control valve according to any of the preceding claims, furthermore comprising a control unit (10) which is configured to control the actuator (4) on the basis of the pressure of the medium upstream of the sealing seat (2) in a flow direction and/or on the basis of a pressure of the medium downstream of the sealing seat (2) in a flow direction.

8. Control valve according to any of the preceding claims, furthermore comprising a resetting element (11) which preloads the valve member (3) into a closed position.

9. Device for metering a gas, in particular a gaseous fuel, comprising a control valve (1) according to any of the preceding claims.

10. Device according to Claim 9, furthermore comprising a first pressure sensor (12) for detecting a pressure upstream of the control valve (1) in a flow direction and/or a second pressure sensor (13) for detecting a pressure downstream of the control valve (1) in a flow direction.

11. Internal combustion engine comprising a control valve according to any of Claims 1 to 8 or a device for metering a gas according to Claim 9 or 10.

## Revendications

1. Soupape de commande d'un milieu, en particulier d'un carburant, ladite soupape comprenant :
- un siège d'étanchéité (2),
- un organe de soupape (3) qui libère et ferme un passage (14) au niveau du siège d'étanchéité (2),
- un boîtier (7) qui comporte le passage (14) sous la forme d'une zone basse à pression (16) et une zone à haute pression (15) séparée de la zone à basse pression (16) par la soupape de commande,
- un actionneur (4) disposé dans une zone d'actionneur du boîtier (7) et destiné à actionner l'organe de soupape (3), et
- un soufflet (5) qui est fixé à l'organe de soupape (3) et qui est destiné à étanchéifier la zone d'actionneur par rapport à la zone à haute pression (15),
- l'élément de soupape (3) étant disposé à l'intérieur du soufflet (5), et
- le diamètre le plus à l'extérieur (D1) du siège d'étanchéité (2) étant égal au diamètre moyen (D2) du soufflet (5),
**caractérisée en ce que**
- l'organe de soupape (3) est creux et comporte deux ouvertures de compensation (30, 31), l'une des ouvertures de compensation (30) débouchant dans le passage (14) et l'autre ouverture de compensation (31) débouchant dans la zone d'actionneur.

2. Soupape de commande selon la revendication 1, **caractérisée en ce que** le soufflet (5) est disposé au niveau d'une zone de bord la plus extérieure de l'organe de soupape (3).

3. Soupape de commande selon la revendication 1 ou 2, **caractérisée en ce que** l'organe de soupape (3) comporte une zone d'élargissement à laquelle le soufflet (5) est fixé.

4. Soupape de commande selon l'une des revendications précédentes, **caractérisée en ce que** le soufflet (5) est un soufflet métallique et/ou **en ce que** le siège d'étanchéité (2) est un siège d'étanchéité plat.

5. Soupape de commande selon l'une des revendications précédentes, comprenant en outre un élément élastomère (9) qui est disposé sur le siège d'étanchéité (2).

6. Soupape de commande selon l'une des revendications précédentes, **caractérisée en ce que** l'actionneur (4) est un actionneur magnétique à commande électrique.

7. Soupape de commande selon l'une des revendications précédentes, comprenant en outre une unité de commande (10) qui est conçue pour commander l'actionneur (4) en fonction d'une pression du milieu en amont du siège d'étanchéité (2) dans le sens d'écoulement et/ou en fonction d'une pression du milieu en aval du siège d'étanchéité (2) dans le sens d'écoulement.

8. Soupape de commande selon l'une des revendications précédentes, comprenant en outre un élément de rappel (11) qui précontraint l'élément de soupape (3) dans une position fermée.

9. Dispositif de dosage d'un gaz, en particulier d'un carburant gazeux, comprenant une soupape de commande (1) selon l'une des revendications précédentes.

10. Dispositif selon la revendication 9, comprenant en outre un premier capteur de pression (12) destiné à détecter une pression en amont de la soupape de commande (1) dans le sens d'écoulement et/ou un deuxième capteur de pression (13) destiné à détecter une pression en aval de la soupape de commande (1) dans le sens d'écoulement.

11. Moteur à combustion interne, comprenant une soupape de commande selon l'une des revendications 1 à 8 ou un dispositif de dosage d'un gaz selon la revendication 9 ou 10.
